# NEUE EUROPÄISCHE PATENTSCHRIFT

(11) **EP 1 833 702 B2**
(45) Veröffentlichungstag und Bekanntmachung des Hinweises auf die Entscheidung über den Einspruch: **17.08.2016**
(45) Hinweis auf die Patenterteilung: 25.08.2010
(21) Anmeldenummer: 05823919.5
(22) Anmeldetag: 22.12.2005
(51) Int. Cl.: B60R 21/015, G01V 9/00

(54) **SENSORMATTE MIT ZWEI SCHALTNIVEAUS**
SENSOR MAT COMPRISING TWO SWITCHING LEVELS
TAPIS DE DETECTION COMPRENANT DEUX NIVEAU DE COMMUTATION

(30) Priorität: 03.01.2005 DE 202005000018 U
(43) Veröffentlichungstag der Anmeldung: 19.09.2007
(73) Patentinhaber: IEE INTERNATIONAL ELECTRONICS & ENGINEERING S.A., 6468 Echternach (LU)
(72) Erfinder: JUNGEN, Dietmar, 54552 Mehren (DE); STEIER, Andreas, 54331 Pellingen (DE)
(74) Vertreter: Office Freylinger
(86) Internationale Anmeldenummer: PCT/EP2005/057087
(87) Internationale Veröffentlichungsnummer: WO 2006/072551

(56) Entgegenhaltungen:
- EP-A- 1 510 802
- EP-A1- 0 891 898
- EP-A1- 1 491 408
- EP-A1- 1 492 136
- EP-A2- 0 841 219
- DE-C1- 4 237 072
- DE-C1- 19 717 273
- DE-T2- 69 707 906
- US-A- 4 315 238
- US-A- 4 492 949
- US-B1- 6 366 200
- US-B1- 6 450 046
- US-B1- 6 450 046
- PATENT ABSTRACTS OF JAPAN Bd. 2000, Nr. 01, 31. Januar 2000 (2000-01-31) & JP 11 297153 A (FUJIKURA LTD), 29. Oktober 1999 (1999-10-29)

## Beschreibung

### Einleitung

Die vorliegende Erfindung betrifft allgemein eine Sensormatte zur Ermittlung einer Sitzbelegungssituation bei einem Fahrzeugsitz.

Sitzbelegungssensoren werden seit geraumer Zeit zur Airbagsteuerung in Fahrzeugen eingesetzt. Anhand dieser Sitzbelegungssensoren wird ein Belegungszustand eines Fahrzeugsitzes ermittelt und der oder die dem Sitz zugeordneten Airbags werden nur dann aktiviert, wenn der momentane Belegungszustand eine solche Auslösung erforderlich macht. Diese Sitzbelegungssensoren weisen im allgemeinen eine Vielzahl von Schaltelementen, z.B. Drucksensoren, auf, die verteilt in der Sitzfläche des Fahrzeugssitzes angeordnet sind. Eine an den Sitzbelegungssensor angeschlossene Auswerteeinheit fragt den Schaltzustand der einzelnen Schaltelemente ab und ermittelt aus den jeweiligen Schaltzuständen einen Belegungszustand des Sitzes. Ist der Sitz durch eine Person belegt, werden mehrere der Schaltelemente aufgrund der durch eine Person auf den Sitz ausgeübten Gewichtskraft ausgelöst, ein Zustand der von der angeschlossenen Auswerteschaltung als Belegungszustand des Sitzes erkannt und an die Airbagsteuerung weitergegeben wird.

Um eine sichere Auslösung der dem Fahrzeugsitz zugeordneten Airbags zu ermöglichen, muss ein solcher Sitzbelegungssensor derart ausgestaltet sein, dass bereits eine geringe Auslösung der Sensormatte von der Auswerteeinheit als Belegung des Sitzes erkannt wird, so dass die entsprechenden Airbags im Crashfall aktiviert werden. Hierzu muss die Sensormatte eine hohe Dynamik aufweisen, so dass feinfühlig zwischen unterschiedlichen Sitzbelegungssituationen unterschieden werden kann.

Für nicht-sicherheitskritische Anwendungen wie beispielsweise in einem Sicherheitsgurt-Warnsystem, ist eine derartige sensible Erkennung der Sitzbelegung nicht notwendig bzw. nicht erwünscht. Ein derartiges Wamsystem gibt beispielsweise ein akustisches oder optisches Signal aus, wenn der Fahrzeugsitz belegt ist ohne dass das Gurtschloss des zugeordneten Sicherheitsgurtes eingeschnappt ist. Der Sitzbelegungssensor in einem derartigen System muss im wesentlichen eine Unterscheidung einer Sitzbelegung durch einen Passagier und eine Belegung durch einen leichten Gegenstand, wie beispielsweise eine Handtasche, ermöglichen. Hierzu soll der Sitzbelegungssensor vorzugsweise ab einer bestimmen Auslösung eine eindeutige Signaländerung hervorrufen, die als Schaltschwelle für die angeschlossene Auswerteeinheit gilt.

Die Anforderungen an einen Sitzbelegungssensor für ein Sicherheitsgurt-Warnsystem weichen demnach von den Anforderungen an eine Sensormatte zur Airbagsteuerung deutlich ab. Soll eine einzige Sensormatte sowohl zur Airbagsteuerung als auch in einem Sicherheitsgurt-Warnsystem eingesetzt werden, stellen diese unterschiedlichen Anforderungen ein erhebliches Problem bei der Auslegung der Sensormatte dar.

### Aufgabe der Erfindung

Aufgabe der vorliegenden Erfindung ist es folglich, eine Sensormatte vorzuschlagen, die einen kombinierten Einsatz ermöglicht.

### Allgemeine Beschreibung der Erfindung

Diese Aufgabe wird gelöst durch eine Sensormatte nach Anspruch 1. Eine solche Sensormatte zur Ermittlung einer Sitzbelegungssituation bei einem Fahrzeugsitz umfasst eine Vielzahl von Sensorzellen, die einer Sitzfläche des Fahrzeugsitzes zugeordnet werden können, wobei die Sensorzellen derart ausgestaltet und untereinander verschaltet sind, dass ein Ausgangssignal der Sensormatte in Abhängigkeit von der Sitzbelegungssituation variiert. Eine Mehrzahl erster Sensorzellen und eine Mehrzahl zweiter Sensorzellen sind derart zu einem Sensorzellengruppe verschaltet, dass bei bestimmungsgemäßer Verwendung der Sensormatte ein Ausgangssignal der Sensormatte einen vorgegebenen Schwellenwert unabhängig von dem Auslösezustand der anderen Sensorzellen nur dann über- bzw. unterschreitet, wenn gleichzeitig mindestens eine Sensorzelle der Mehrzahl erster Sensorzellen und mindestens eine Sensorzelle der Mehrzahl zweiter Sensorzellen ausgelöst sind.

Die ersten Sensorzellen und die zweiten Sensorzellen der Sensormatte sind als Drucksensoren mit einem druckabhängigen elektrischen Widerstand ausgestaltet. Als Drucksensoren eignen sich insbesondere Foliendrucksensoren, die kostengünstig in Form von Sensormatten herstellbar sind. Bei einer solchen Ausgestaltung ist das Ausgangssignal der Sensormatte im Prinzip abhängig von der auf die Sensormatte einwirkenden Gewichtskraft, wobei der Gesamtwiderstand der Sensorzellen bzw. der Sensormatte mit zunehmender Gewichtskraft abnimmt. Es werden dann bei der vorliegenden Sensormatte mindestens zwei individuelle Drucksensoren derart zu einem Sensorzellenpaar verschaltet, dass bei gleichzeitigem Auslösen der beiden Drucksensoren der Widerstandswert der Sensormatte, unabhängig von der Auslösung der anderen Drucksensoren, unter einen bestimmten Schwellenwert fällt. Die beiden zu einem Sensorzellenpaar verschalteten Drucksensoren sind dabei vorzugsweise derart ausgestaltet und miteinander verschaltet, dass durch die gleichzeitige Auslösung der beiden Drucksensoren ein Kurzschluss zwischen den einzelnen Anschlussleitungen hergestellt wird so dass der Widerstandswert der Sensormatte bei Auslösung des Sensorzellenpaares auf einen Wert nahe Null fällt.

Die als Foliendrucksensoren ausgestalteten ersten Sensorzelle und die zweiten Sensorzellen umfassen jeweils eine erste und eine zweite Elektrode, die in einem gewissen Abstand zueinander auf einer ersten Trägerfolie angeordnet sind und eine Auslöseschicht, die den jeweils ersten und zweiten Elektroden gegenüberliegend auf einer zweiten Trägerfolie derart angeordnet ist, dass die Auslöseschicht beim Zusammendrücken der ersten und zweiten Trägerfolie die erste und zweite Elektrode druckabhängig miteinander kontaktiert.

Erfindungsgemäss weisen die erste Sensorzelle und die zweite Sensorzelle jeweils eine dritte Elektrode auf, wobei in der ersten Sensorzelle die dritte Elektrode der ersten Elektrode gegenüberliegend auf der zweiten Trägerfolie angeordnet ist und wobei in der zweiten Sensorzelle die dritte Elektrode der zweiten Elektrode gegenüberliegend auf der zweiten Trägerfolie angeordnet ist, und wobei die dritte Elektrode der ersten Sensorzelle mit der dritten Elektrode der zweiten Sensorzelle verschaltet ist.

Durch diese Anordnung der dritten Elektroden in den einzelnen Sensorzellen und die beschriebene Verschaltung der dritten Elektroden untereinander werden die beiden ersten und zweiten Elektroden der Sensorzellen im Fall einer Auslösung der beiden Drucksensoren über die jeweils dritten Elektroden und deren Verschaltung kurzgeschlossen, so dass an den jeweilige Anschlussleitungen ein abrupter Abfall des Widerstandswerts der Sensormatte unter einen vorbestimmten Schwellenwert detektierbar ist.

Die vorgeschlagene Sensormatte weist demnach zwei unterschiedliche Schaltschwellen auf, die je nach Anforderung der einzelnen Anwendungen der Sensormatte im wesentlichen unabhängig voneinander eingestellt werden können. Solange keine oder nur eine der beiden ersten und zweiten Sensorzellen des Sensorzellenpaares durch eine Belegungssituation ausgelöst wird, kann das Ausgangssignal der Sensormatte sensibel je nach Größe der belegten Sitzfläche bzw. je nach auf die Sitzfläche wirkende Gewichtskraft variieren. Diese empfindliche Variation des Ausgangssignals kann in der angeschlossenen Auswerteschaltung ausgewertet werden, um eine Aktivierung der Rückhaltesysteme präzise zu steuern.

Sobald jedoch sowohl jeweils eine erste und eine zweite Sensorzelle ausgelöst werden, ändert das Ausgangssignal der Sensormatte abrupt und passiert den vorgegebenen Schwellenwert. Dieses Verhalten des Ausgangssignals kann in der angeschlossenen Auswerteschaltung eindeutig einer bestimmten Belegungssituation zugeordnet werden, bei der zusätzlich zur Aktivierung der Rückhaltesysteme auch beispielsweise eine Sicherheitsgurt-Warnvorrichtung aktiviert wird. Es ist anzumerken, dass die Schaltschwellen der Sensormatte derart eingestellt werden können, dass der vorbestimmte Schwellenwert des Ausgangssignals nur dann passiert wird, wenn die beiden Sensorzellen des Zellenpaares aktiviert werden. Hierdurch kann beispielsweise wirksam ausgeschlossen werden, dass eine Sicherheitsgurt-Warnvorrichtung aktiviert wird, ohne dass eine eindeutige Sitzbelegungssituation vorliegt.

Es ist anzumerken, dass gemäss der Erfindung eine größere Anzahl von Sensorzellen derart miteinander verschaltet werden können, so dass beim gleichzeitigen Auslösen mehrerer dieser Zellen ein vorbestimmter Schwellenwert des Ausgangssignals der Sensormatte über- bzw. unterschritten wird. So kann beispielsweise eine Parallelschaltung mehrerer erster Sensorzellen mit einer entsprechenden Parallelschaltung mehrerer zweiter Sensorzellen in der vorbeschriebenen Art miteinander verschaltet werden. In diesem Fall kann der vorbestimmte Schwellenwert des Ausgangssignals beispielsweise bereits bei der gleichzeitigen Auslösung jeweils einer der ersten und einer der zweiten Sensorzellen erreicht werden.

In einer möglichen Ausgestaltung der Erfindung sind die erste und die zweite Sensorzelle in unmittelbarer Nähe zueinander angeordnet. Bei einer solchen Anordnung der Sensorzellen wird der vorbestimmte Schwellenwert nur dann passiert, wenn eine Sitzbelegung im Bereich des Sensorzellenpaares lokal eine bestimmte Aktivierungsschwelle überschreitet. In einer anderen möglichen Ausgestaltung ist die erste Sensorzelle in einem ersten Bereich der Sensormatte und die zweite Sensorzelle in einem zweiten Bereich der Sensormatte angeordnet. Die beiden Sensorzellen des Sensorzellenpaares können beispielsweise in zumindest annähernd gleichen Abstand bezüglich einer in Fahrzeuglängsrichtung verlaufenden Mittellinie des Sitzes und in einem gewissen Abstand zueinander angeordnet. Durch diese symmetrische Anordnung der Schaltelemente bezüglich der Mittellinie des Sitzes wird eine für das Gurtwarnsystem relevante Sitzbelegung erst dann als solche erkannt, wenn die Belegung des Fahrzeugsitzes sich über eine vorbestimmte Distanz erstreckt und wenn die Belegung zumindest annähernd symmetrisch bezüglich der Mittelebene des Sitzes erfolgt. Eine lokale Auslösung des Sitzbelegungssensors, wie sie beispielsweise durch die Präsenz eines Gegenstands wie beispielsweise durch eine auf dem Sitz abgelegte Handtasche erfolgt, wird nicht als Sitzbelegung erkannt und das Gurtwarnsystem spricht dementsprechend nicht an.

In einer besonders einfachen Ausgestaltung der Erfindung sind die erste und die zweite Sensorzelle über eine individuelle Verbindungsbahn miteinander verschaltet. Eine solche direkte Verschaltung über eine individuelle Verbindungsbahn ist insbesondere dann einfach zu realisieren, wenn die beiden Sensorzellen des Sensorzellenpaares in einem geringen Abstand zueinander angeordnet sind. Sind die Sensorzellen des Sensorzellenpaares hingegen in zwei voneinander entfernten Bereichen der Sensormatte angeordnet, kann es möglicherweise vorteilhaft sein, wenn die erste und die zweite Sensorzelle über eine angeschlossene Auswerteschaltung miteinander verschaltet sind. Bei einer solchen Ausgestaltung, bei der die einzelnen Sensorzellen des Sensorzellenpaares individuell, z.B. in einer Matrixverschaltung, an die Auswerteschaltung angeschlossen sind, muss keine individuelle Verbindungsbahn über weite Bereiche der Sensormatte verlegt werden. Die Integration einer derartigen Verbindungsbahn kann in der Tat im Hinblick auf zu vermeidende Überkreuzungen von Leiterbahnen zu unlösbaren Problemen führen, insbesondere dann, wenn in die Sensormatte weitere Funktionselemente wie beispielsweise Antennen einer Kindersitzerkennung integriert sind.

In einer vorteilhaften Variante der Erfindung sind die erste und zweite Sensorzelle jeweils zwischen einen ersten und einen zweiten Anschlussleiter geschaltet und die erste und zweite Sensorzelle derart ausgestaltet und miteinander verschaltet sind, dass beim gleichzeitigen Auslösen der ersten und der zweiten Sensorzelle ein Kurzschluss zwischen dem ersten und dem zweiten Anschlussleiter entsteht. Der bei der Auslösung der beiden Sensorzellen hergestellte Kurzschluss kann von der angeschlossenen Auswerteschaltung leicht als Unterschreiten eines niedrigen Widerstandsschwellenwertes erfasst werden.

### Detaillierte Beschreibung anhand der Figuren

Im folgenden wird eine Ausgestaltung der Erfindung anhand der beiliegenden Figuren beschrieben. Es zeigen:
- Fig.1:: eine schematische Darstellung einer ersten Ausgestaltung einer Sensormatte gemäss der vorliegenden Erfindung;
- Fig.2:: eine schematische Darstellung einer zweiten Ausgestaltung einer Sensormatte gemäss der vorliegenden Erfindung;
- Fig.3:: einen Schnitt durch eine mögliche Ausgestaltung eines Foliendrucksensorenpaares.

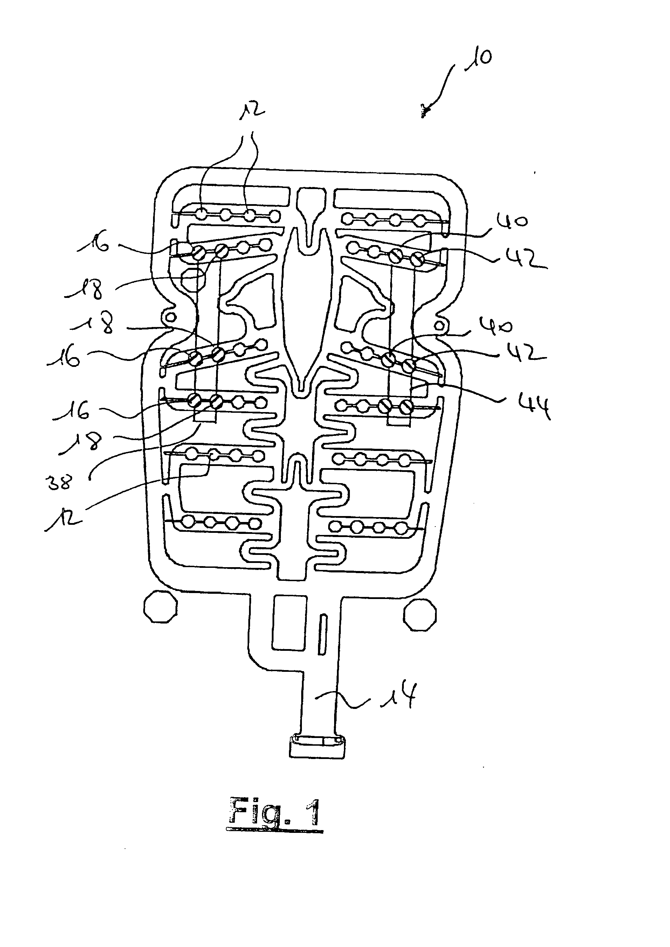

Eine erste Ausgestaltung einer Sensormatte 10 ist schematisch in der Fig. 1 dargestellt. Eine derartige Sensormatte 10 umfasst beispielsweise eine Vielzahl individueller Sensorzellen 12, die in einer beispielsweise durch eine bestimmte Sitzgeometrie vorgegebenen Anordnung zueinander angeordnet sind. Die einzelnen Sensorzellen sind beispielsweise als Foliendrucksensoren ausgebildet, die zwischen gemeinsame Trägerfolien aufgebracht sind. Je nach Ausgestaltung der Sensormatte sind die einzelnen Sensorzellen 12 entweder einzeln oder zu Gruppen zusammengefasst über zwischen den Trägerfolien verlaufende Anschlussleitungen mit einer Anschlussfahne 14 der Sensormatte 10 kontaktiert. Mittels dieser Anschlussfahne 14 kann die Sensormatte 10 an eine (nicht dargestellte) Auswerteschaltung derart angeschlossen werden, dass die Schaltzustände der einzelnen Sensoren bzw. Sensorgruppen ermittelt werden können.

Bei der in der Fig. 1 dargestellten Ausgestaltung der Sensormatte 10, sind mehrere erste Sensorzellen 16 und mehrere zweite Sensorzellen 18 untereinander derart verschaltet, dass ein Ausgangssignal der Sensormatte 10 bei gleichzeitiger Auslösung von jeweils mindestens einer ersten Sensorzelle 16 und einer zweiten Sensorzelle 18 unabhängig von dem Auslösezustand der anderen Sensorzellen einen vorbestimmten Schwellenwert passiert. In dem Fall einer Ausgestaltung mit Foliendrucksensoren, d.h. mit druckabhängigen Widerständen, kann eine solche Verschaltung beispielsweise derart ausgeführt werden, dass der Widerstandswert der Sensormatte bzw. einer Gruppe von Sensorzellen der Sensormatte auf einen Widerstandswert nahe Null fällt.

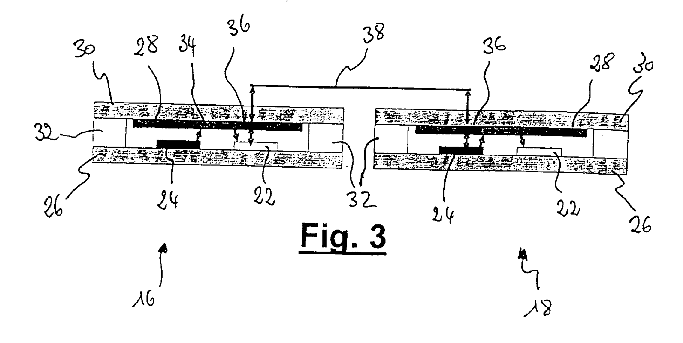

Eine mögliche Ausgestaltung eines derartig verschalteten Foliendrucksensorpaares ist in der Fig. 3 dargestellt. Jeder der Foliendrucksensoren 16 und 18 umfasst eine erste Elektrode 22 und eine zweite Elektrode 24, die in einem gewissen Anstand zueinander auf einer ersten Trägerfolie 26 aufgebracht sind. Weiterhin umfasst jeder der Foliendrucksensoren 16 und 18 eine Auslöseschicht 28, die den jeweils ersten und zweiten Elektroden 22 und 24 gegenüberliegend auf einer zweiten Trägerfolie 30 angeordnet ist. Die erste Trägerfolie 26 und die zweite Trägerfolie 30 sind derart mittels eines Abstandhalters 32 zueinander angeordnet, dass bei nicht ausgelöster Schaltzelle die Auslöseschicht 30 keinen elektrischen Kontakt zwischen der ersten und der zweiten Elektrode herstellt, wogegen beim Zusammendrücken der ersten und zweiten Trägerfolie die Auslöseschicht 28 die erste und zweite Elektrode druckabhängig miteinander kontaktiert (dargestellt durch den Strompfad 34).

Jeder der beiden Foliendrucksensoren 16 und 18 weist weiterhin eine dritte Elektrode 36 auf, die jeweils auf der zweiten Trägerfolie 30 aufgebracht ist. In der ersten Sensorzelle 16 ist die dritte Elektrode 36 der ersten Elektrode 22 gegenüberliegend angeordnet, während die dritte Elektrode 36 in der zweiten Sensorzelle 18 der zweiten Elektrode 24 gegenüberliegend angeordnet ist. Zur erfindungsgemäßen Verschaltung der beiden Sensorzellen sind die jeweils dritten Elektroden 36 mittels einer Verbindungsbahn 38 miteinender kontaktiert. Werden gleichzeitig die erste Sensorzelle 16 und die zweite Sensorzelle 18 ausgelöst, so werden die erste Elektrode 22 in der ersten Zelle 16 und die zweite Elektrode 24 der zweiten Zelle 18 über die gegenüberliegenden dritten Elektroden 36 und deren Verbindungsbahn 38 miteinander kontaktiert, so dass der Widerstandswert zwischen den beiden Elektroden 22 und 24 auf einen Wert nahe Null abfällt.

In der in der Fig. 1 dargestellten Ausführung der Sensormatte sind die verschiedenen ersten und zweiten Sensorzellen 16 bzw. 18 über ihre jeweils dritten Elektroden mittels einer durchgehenden individuellen Verbindungsbahn 38 miteinander verschaltet. Es ist anzumerken, dass eine Sensormatte mehrere miteinander verschaltete Sensorzellengruppen aufweisen kann. Bei der in der Fig. 1 dargestellten Sensormatte 10 ist beispielsweise eine weitere Schaltzellengruppe mit ersten und zweiten Schaltzellen 40 und 42 mittels einer Verbindungsbahn 44 miteinander verschaltet. Die beiden Schaltzellengruppen sind dabei symmetrisch beiderseits einer Mittellinie der Sensormatte angeordnet.

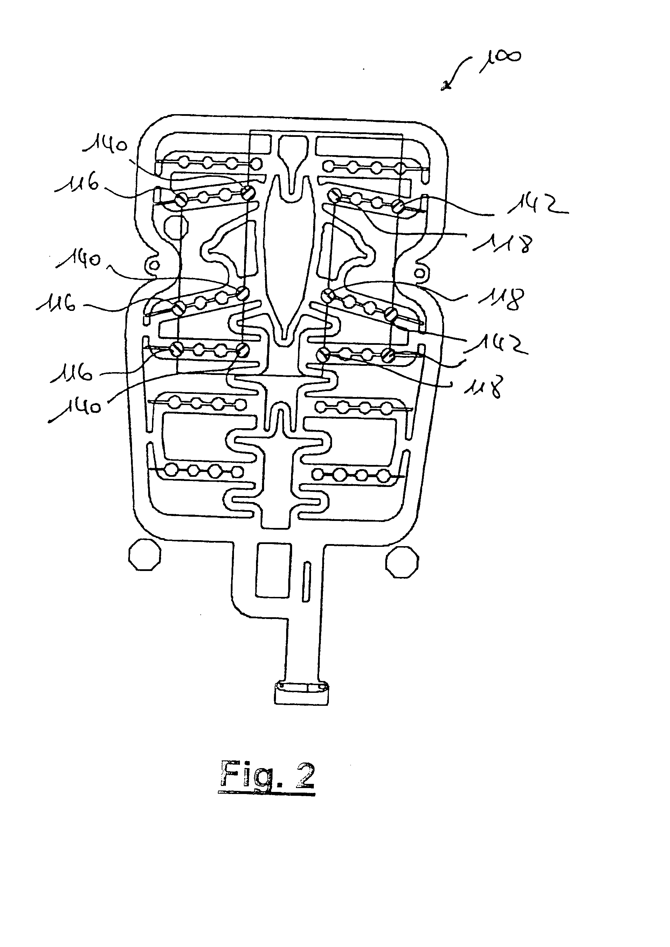

Eine weitere Ausgestaltung einer Sensormatte 100 ist in der Fig. 2 dargestellt. Bei dieser Ausgestaltung liegen die jeweils ersten Sensorzellen 116 bzw. 140 r und die zweiten Sensorzellen 118, bzw. 142 nicht unmittelbar nebeneinander, sondern sind jeweils in unterschiedlichen Bereichen der Sensormatte 100 angeordnet. Die ersten und zweiten Sensorzellen jeder Sensorzellengruppe können beispielsweise in zumindest annähernd gleichen Abstand bezüglich einer in Fahrzeuglängsrichtung verlaufenden Mittellinie des Sitzes und in einem gewissen Abstand zueinander angeordnet sein. Durch diese symmetrische Anordnung der Schaltelemente bezüglich der Mittellinie des Sitzes wird eine für das Gurtwarnsystem relevante Sitzbelegung erst dann als solche erkannt, wenn die Belegung des Fahrzeugsitzes sich über eine vorbestimmte Distanz erstreckt und wenn die Belegung zumindest annähernd symmetrisch bezüglich der Mittelebene des Sitzes erfolgt. Eine lokale Auslösung des Sitzbelegungssensors, wie sie beispielsweise durch die Präsenz eines Gegenstands wie beispielsweise durch eine auf dem Sitz abgelegte Handtasche erfolgt, wird nicht als Sitzbelegung erkannt und das Gurtwarnsystem spricht dementsprechend nicht an.

## Patentansprüche

1. Sensormatte zur Ermittlung einer Sitzbelegungssituation bei einem Fahrzeugsitz, umfassend eine Vielzahl von Sensorzellen, die einer Sitzfläche des Fahrzeugsitzes zugeordnet werden können, wobei die Sensorzellen derart ausgestaltet und untereinander verschaltet sind, dass ein Ausgangssignal der Sensormatte in Abhängigkeit von der Sitzbelegungssituation variiert, wobei eine Mehrzahl erster Sensorzellen und eine Mehrzahl zweiter Sensorzellen derart zu einer Sensorzellengruppe verschaltet sind, dass bei bestimmungsgemäßer Verwendung der Sensormatte ein Ausgangssignal der Sensormatte einen vorgegebenen Schwellenwert nur dann über- bzw. unterschreitet, wenn gleichzeitig mindestens eine Sensorzelle der Mehrzahl erster Sensorzellen und mindestens eine Sensorzelle der Mehrzahl zweiter Sensorzellen ausgelöst sind, wobei die ersten Sensorzellen und die zweiten Sensorzellen als Drucksensoren mit einem druckabhängigen elektrischen Widerstand ausgestaltet sind und jeweils eine erste und eine zweite Elektrode umfassen, die in einem gewissen Abstand zueinander auf einer ersten Trägerfolie angeordnet sind und eine Auslöseschicht, die den jeweils ersten und zweiten Elektroden gegenüberliegend auf einer zweiten Trägerfolie derart angeordnet ist dass die Auslöseschicht beim Zusammendrücken der ersten und zweiten Trägerfolie die erste und zweite Elektrode miteinander kontaktiert, **dadurch gekennzeichnet dass** die ersten Sensorzellen und die zweiten Sensorzellen jeweils eine dritte Elektrode aufweisen, wobei in den ersten Sensorzellen die dritte Elektrode der ersten Elektrode gegenüberliegend auf der zweiten Trägerfolie angeordnet ist und wobei in den zweiten Sensorzellen die dritte Elektrode der zweiten Elektrode gegenüberliegend auf der zweiten Trägerfolie angeordnet ist, und wobei die dritte Elektrode der ersten Sensorzellen mit der dritten Elektrode der zweiten Sensorzellen verschaltet ist.

2. Sensormatte nach Anspruch 1, wobei die Mehrzahl erster Sensorzellen und die Mehrzahl zweiter Sensorzellen in unmittelbarer Nähe zueinander angeordnet sind.

3. Sensormatte nach Anspruch 1, wobei die Mehrzahl erster Sensorzellen in einem ersten Bereich der Sensormatte und die Mehrzahl zweiter Sensorzellen in einem zweiten Bereich der Sensormatte angeordnet ist.

4. Sensormatte nach einem der vorhergehenden Ansprüche, wobei die Mehrzahl erster Sensorzellen und die Mehrzahl zweiter Sensorzellen über eine angeschlossene Auswerteschaltung miteinander verschaltet sind.

5. Sensormatte nach einem der vorhergehenden Ansprüche, wobei die Mehrzahl erster Sensorzellen und die Mehrzahl zweiter Sensorzellen über eine individuelle Verbindungsbahn miteinander verschaltet sind.

6. Sensormatte nach einem der vorhergehenden Ansprüche, wobei die Mehrzahl erster Sensorzellen und Mehrzahl zweiter Sensorzellen jeweils zwischen einen ersten und einen zweiten Anschlussleiter geschaltet sind und wobei die Mehrzahl erster Sensorzellen und die Mehrzahl zweiter Sensorzellen derart ausgestaltet und miteinander verschaltet sind, dass beim gleichzeitigen Auslösen einer ersten und einer zweiten Sensorzelle ein Kurzschluss zwischen dem ersten und dem zweiten Anschlussleiter entsteht.

7. Sensormatte nach Anspruch 1, wobei die dritte Elektrode der ersten Sensorzellen und die dritte Elektrode der zweiten Sensorzellen über eine angeschlossene Auswerteschaltung miteinander verschaltet sind.

8. Sensormatte nach einem der vorhergehenden Ansprüche, wobei die dritte Elektrode der ersten Sensorzellen und die dritte Elektrode der zweiten Sensorzellen über eine individuelle Verbindungsbahn miteinander verschaltet sind.

## Claims

1. Sensor mat for the determination of a seat occupancy situation in a car seat, consisting of a number of sensor cells, which can be allocated to a seat surface of the car seat, wherein the sensor cells are designed and interconnected such that an output signal of the sensor mat varies depending on the seat occupancy situation, wherein a plurality of the first sensor cells and a plurality of the second sensor cells are interconnected to a sensor cell group such that during proper use of the sensor mat, an output signal of the sensor mat exceeds or undershoots a predetermined threshold value only when at least one sensor cell from the plurality of the first sensor cells and at least one sensor cell from the plurality of the second sensor cells are triggered simultaneously, wherein the first sensor cells and the second sensor cells are designed as pressure sensors with a pressuredependent electric resistance and contain a first and a second electrode each, which are arranged with respect to each other at a specific distance on a first carrier film and a shunt layer, which is arranged on a second carrier film with the first and the second electrodes facing opposite, such that the shunt layer contacts the first and the second electrode with each other upon pressing the first and the second carrier film together, **characterised in that** the first sensor cells and the second sensor cells have a third electrode each, wherein, in the first sensor cells, the third electrode is arranged on the second carrier film facing the first electrode, and wherein in the second sensor cells, the third electrode is arranged on the second carrier film facing the second electrode, and wherein the third electrode of the first sensor cells is connected with the third electrode of the second sensor cells.

2. Sensor mat as per claim 1, wherein the plurality of the first sensor cells and the plurality of the second sensor cells are arranged in direct vicinity with respect to one other.

3. Sensor mat as per claim 1, wherein the plurality of the first sensor cells is arranged in a first area of the sensor mat and the plurality of the second sensor cells in a second area of the sensor mat.

4. Sensor mat as per one of the previous claims, wherein the plurality of the first sensor cells and the plurality of the second sensor cells are interconnected via a connected evaluation circuit.

5. Sensor mat as per one of the previous claims, wherein the plurality of the first sensor cells and the plurality of the second sensor cells are interconnected over an individual connecting path.

6. Sensor mat as per one of the previous claims, wherein the plurality of the first sensor cells and the plurality of the second sensor cells are connected between a first and a second connecting conductor each, and wherein the plurality of the first sensor cells and the plurality of the second sensor cells are designed and interconnected such that when a first and a second sensor cell are triggered simultaneously, a short circuit develops between the first and the second connecting conductor.

7. Sensor mat as per claim 1, wherein the third electrode of the first sensor cells and the third electrode of the second sensor cells are interconnected via a connected evaluation circuit.

8. Sensor mat as per one of the previous claims, wherein the third electrode of the first sensor cells and the third electrode of the second sensor cells are interconnected over an individual connection path.

## Revendications

1. Tapis de détecteurs pour déterminer une situation d'occupation de siège dans un siège de véhicule, comprenant une pluralité de cellules de détection, qui peuvent être associées à une surface de siège du siège de véhicule, les cellules de détection étant configurées et interconnectées de sorte qu'un signal de sortie du tapis de détecteurs varie en fonction de la situation d'occupation de siège, une pluralité de premières cellules de détection et une pluralité de deuxièmes cellules de détection étant interconnectées pour former un groupe de cellules de détection de sorte que, lors d'une utilisation prévue du tapis de détecteurs, le signal de sortie du tapis de détecteurs ne dépasse alors vers le bas ou vers le haut une valeur de seuil prédéterminée que lorsqu'au moins une cellule de détection de la pluralité de premières cellules de détection et au moins une cellule de détection de la pluralité de deuxièmes cellules de détection sont déclenchées simultanément, les premières cellules de détection et les deuxièmes cellules de détection étant réalisées comme capteurs de pression ayant une résistance électrique dépendant de la pression et comprenant respectivement une première et une deuxième électrodes, lesquelles sont disposées sur une première feuille porteuse avec un certain écart l'une par rapport à l'autre, et comprenant une couche de déclenchement qui est disposée sur une deuxième feuille porteuse de manière opposée respectivement à la première et à la deuxième électrodes, de manière à ce que la couche de déclenchement, lorsque la première et la deuxième feuilles porteuses sont comprimées, mette en contact la première et la deuxième électrodes, **caractérisé en ce que** les premières cellules de détection et les deuxièmes cellules de détection présentent respectivement une troisième électrode, la troisième électrode, dans les premières cellules de détection, étant disposée sur la deuxième feuille porteuse de manière opposée à la première électrode, et la troisième électrode, dans les deuxièmes cellules de détection, étant disposée sur la deuxième feuille porteuse de manière opposée à la deuxième électrode, et la troisième électrode des premières cellules de détection étant connectée à la troisième électrode des deuxièmes cellules de détection.

2. Tapis de détecteurs selon la revendication 1, dans lequel la pluralité des premières cellules de détection et la pluralité des deuxièmes cellules de détection sont disposées à proximité immédiate l'une de l'autre.

3. Tapis de détecteurs selon la revendication 1, dans lequel la pluralité de premières cellules de détection est disposée dans une première zone du tapis de détecteurs et la pluralité de deuxièmes cellules de détection est disposée dans une deuxième zone du tapis de détecteurs.

4. Tapis de détecteurs selon l'une quelconque des revendications précédentes, dans lequel la pluralité de premières cellules de détection et la pluralité de deuxièmes cellules de détection sont interconnectées par l'intermédiaire d'un circuit d'évaluation raccordé.

5. Tapis de détecteurs selon l'une quelconque des revendications précédentes, dans lequel la pluralité de premières cellules de détection et la pluralité de deuxièmes cellules de détection sont interconnectées par l'intermédiaire d'une ligne de connexion individuelle.

6. Tapis de détecteurs selon l'une quelconque des revendications précédentes, dans lequel la pluralité de premières cellules de détection et la pluralité de deuxièmes cellules de détection sont respectivement branchées entre un premier et un deuxième conducteur de raccordement et dans lequel la pluralité de premières cellules de détection et la pluralité de deuxièmes cellules de détection sont configurées et interconnectées de sorte que lors du déclenchement simultané d'une première et d'une deuxième cellule de détection, un court-circuit se forme entre le premier et le deuxième conducteur de raccordement.

7. Tapis de détecteurs selon la revendication 1, dans lequel la troisième électrode des premières cellules de détection et la troisième électrode des deuxièmes cellules de détection sont interconnectées par l'intermédiaire d'un circuit d'évaluation raccordé.

8. Tapis de détecteurs selon l'une quelconque des revendications précédentes, dans lequel la troisième électrode des premières cellules de détection et la troisième électrode des deuxièmes cellules de détection sont interconnectées par l'intermédiaire d'une bande de connexion individuelle.
